(19) Europäisches Patentamt
European Patent Office
Office européen des brevets

(11) EP 1 266 902 B1

(12) EUROPÄISCHE PATENTSCHRIFT

(45) Veröffentlichungstag und Bekanntmachung des Hinweises auf die Patenterteilung:
**17.08.2005 Patentblatt 2005/33**

(51) Int Cl.[7]: **C07F 1/02**, C07F 7/08

(21) Anmeldenummer: **02011652.1**

(22) Anmeldetag: **31.05.2002**

# (54) Verfahren zur Herstellung von Polyfluoralkyllithium-Verbindungen

Process for the preparation of polyfluoroalkyl lithium compounds

Procédé de préparation de composés polyfluoroalkyl lithium

(84) Benannte Vertragsstaaten:
**CH DE FR GB IT LI**

(30) Priorität: **13.06.2001 DE 10128703**

(43) Veröffentlichungstag der Anmeldung:
**18.12.2002 Patentblatt 2002/51**

(73) Patentinhaber: **LANXESS Deutschland GmbH**
**51368 Leverkusen (DE)**

(72) Erfinder:
- **Henrich, Marielouise, Dr.**
  **51373 Leverkusen (DE)**
- **Marhold, Albrecht, Dr.**
  **51373 Leverkusen (DE)**
- **Kolomeitsev, Alexander, Dr.**
  **Kiew 01133 (UA)**
- **Kadyrov, Alexander, Dr.**
  **123481 Moskau (RU)**
- **Röschenthaler, Gerd-Volker, Prof. Dr.**
  **28357 Bremen (DE)**
- **Barten, Jan, Dr.**
  **28357 Bremen (DE)**

(56) Entgegenhaltungen:
**EP-A- 1 170 298** **US-B1- 6 207 846**

- **ADCOCK, JAMES L. ET AL: "Synthesis and reactions of perfluoroneopentyllithium" J. ORG. CHEM. (1979), 44(19), 3431-3 , XP002211886**
- **PIETTRE, SERGE R. ET AL: "Easy and general access to.alpha.,.alpha.-difluoromethylenephospho nothio c acids. A new class of compounds" TETRAHEDRON LETTERS (1996), 37(13), 2229-32 , XP002211887**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 266 902 B1

## Beschreibung

Die Erfindung betrifft ein Verfahren zur Herstellung von Polyfluoralkyllithium-Verbindungen durch Deprotonierung von Polyfluoralkyl-Verbindungen mit Lithiumbasen.

Organische Verbindungen, die mit Polyfluoralkylgruppen substituiert sind, gewinnen zum Beispiel in der Entwicklung neuer Wirkstoffe zunehmend an Bedeutung, da solche Substituenten unter physiologischen Bedingungen inert sind und sich zum Beispiel die Lipophilie und die Reaktivität des organischen Grundgerüsts fein steuern lässt.

Die Einführung von Polyfluoralkyl-Substituenten in ein organisches Molekül erfolgt häufig durch den Einsatz von Polyfluoralkyl-Metall-Verbindungen, die die für nukleophile Reagenzien typischen Additions- und Substitutions-Reaktionen eingehen können.

So kann beispielsweise die Synthese von Pentafluorethyl-trimethylsilan, einem Synthon zur Herstellung pentafluorethylierter Produkte, durch die Reaktion von Pentafluorethyllithium (Herstellung siehe z.B. P. G. Gassmann, N. J. O'Reilly, Tetrahedron 1985, 26, S. 5243) mit Trimethylchlorsilan gemäß Formel (a) erfolgen.

$$CF_3CF_2Li + (CH_3)_3SiCl \rightarrow (CH_3)_3SiCF_2CF_3 + LiCl \qquad (a)$$

Darüberhinaus reagieren solche Organometallverbindungen mit Aldehyden und bilden dabei, wie in Formel (b) gezeigt, polyfluoralkyl-substituierte Alkohole, die wertvolle Ausgangsprodukte für die Herstellung von Materialien für Flüssig-Kristall-Displays (LCD's) darstellen und daher von industriellem Interesse sind.

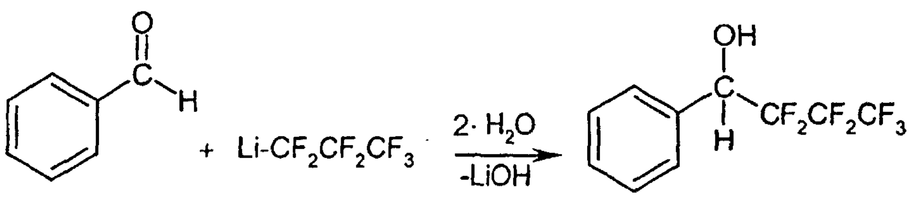


(b)

Auch die Polyfluoralkylverbindungen der Metalle Magnesium und Zink wurden bereits untersucht (R. D. Chambers, W. K. R. Musgrave, J. Savory, J. Chem. Soc., 1962, S. 1993-1999). Diese zeigen jedoch im Vergleich zu ihren Lithium-Analoga nur unzureichende Reaktivität, so dass diese Verbindungen für industriellen Einsatz nicht in Frage kommen.

Adcock (j.L.Adcock, E.B. Renk, J.Org.Chem., vol. 44, 1979, S.3431-3433) offenbart ein Verfahren zur Herstellung von Perfluorneopentyllithium $(CH_3)_3CCF_2Li$ durch Deprotonierung von Perfluor-1H-Neopentan $(CH_3)_3CCF_2H$ mit Lithiumbasen. Jedoch zeigt das Verfahren den Nachteil, dass trotz Verwendung von Perfluor-1 H-Neopentan als Ausgangverbindung, die sowohl an der Zersetzung durch β-Eliminierung gehindert ist als auch durch den extrem starken induktiven Effekt der perfluorierten t-Butylgruppe extrem stabilisiert ist, die Zielverbindung Perfluorneopentyllithium nur in einer geringer Ausbeute erhalten werden kann.

Bislang wurden Polyfluoralkyllithium-Verbindungen ($R^F$-Li) ausschließlich durch Metall-Halogen-Austauschreaktionen gemäß Formel (c) gewonnen, wobei die austauschbaren Halogene der Ausgangsverbindungen Chlor, Brom oder Iod sein können.

$$R\text{-}Li + R^F\text{-}Hal \rightarrow R\text{-}Hal + R^F\text{-}Li \qquad (c)$$

In jüngster Zeit werden jedoch insbesondere die Fluorchlorkohlenwasserstoffe (FCKW) durch ihre schädigende Wirkung auf die Ozonschicht Gegenstand von Substitutionsmaßnahmen. Die ebenso ozonschädlichen Brom- und Iod-Homologen haben zusätzlich den Nachteil, dass sie nicht nur sehr teuer sind, sondern bei ihrem Einsatz durch die hohe Molmasse große Mengen an Abfallstoffen anfallen, deren fachgerechte Entsorgung ein zusätzliches Problem darstellt.

Es bestand daher das Bedürfnis, die synthetisch wertvollen Polyfluoralkyllithium-Verbindungen ohne den Einsatz von gemischten Halogenfluorkohlenwasserstoffen herzustellen.

Es wurde nun gefunden, dass sich Polyfluoralkylverbindungen mit Lithiumbasen deprotonieren lassen.

Die Erfindung betrifft daher ein Verfahren zur Herstellung von Polyfluoralkyllithium-Verbindungen, dadurch

gekennzeichnet, dass man Polyfluoralkylverbindungen mit Lithiumbasen deprotoniert.

Für das erfindungsgemäße Verfahren können als Polyfluoralkylverbindungen beispielsweise Polyfluoralkylreste enthaltende Verbindungen der allgemeinen Formel (I) eingesetzt werden,

$$HCF_2R^1 \qquad (I)$$

in der

$R^1$ Fluor, $(CF_2)_nCF_3$, $(CF_2)_nR^2$

n eine ganze Zahl von 0 bis 17

$R^2$ Tri-($C_1$-$C_6$)-alkylsilyl, Triphenylsilyl, cyclisches Alkyl mit 3 bis 8 Kohlenstoffatomen, geradkettiges oder verzweigtes Alkyl mit 1 bis 24 Kohlenstoffatomen, Aryl mit 6 bis 10 Kohlenstoffatomen, Arylalkyl mit 7 bis 18 Kohlenstoffatomen, geradkettiges oder verzweigtes Alkenyl mit 2 bis 12 Kohlenstoffatomen, geradkettiges oder verzweigtes Alkoxy mit 1 bis 12 Kohlenstoffatomen, Aryloxy mit 6 bis 10 Kohlenstoffatomen, Heteroaryl mit 4 bis 9 Kohlenstoffatomen, Heteroarylalkyl mit 5 bis 17 Kohlenstoffatomen, Heteroaryloxy mit 4 bis 9 Kohlenstoffatomen, wobei die Heteroarylreste jeweils bis zu 2 Heteroatome aus der Reihe Sauerstoff, Schwefel, Stickstoff enthalten können, bedeuten.
In den genannten Alkylverbindungen können die Alkylreste gegebenenfalls weiter mit Di($C_1$-$C_6$)-alkylamino, Alkylthio und Alkyloxy mit 1 bis 12 Kohlenstoffatomen substituiert sein.
Die genannten aromatischen Substituenten können gegebenenfalls bis zu drei weitere Substituenten tragen, die voneinander unabhängig ausgewählt sein können aus der Gruppe Fluor, cyclisches Alkyl mit 3 bis 6 Kohlenstoffatomen, geradkettiges oder verzweigtes Alkyl mit 1 bis 12 Kohlenstoffatomen, geradkettiges oder verzweigtes Alkoxy oder Alkylthio mit 1 bis 12 Kohlenstoffatomen, geradkettiges oder verzweigtes Alkenyl mit 2 bis 12 Kohlenstoffatomen, Di($C_1$-$C_6$)-alkylamino, wobei die Alkylreste auch einen Cyclus bilden können.

Für das erfindungsgemäße Verfahren bevorzugt sind Verbindungen der allgemeinen Formel (I), in der

$R^1$ Fluor, $(CF_2)_nCF_3$, $(CF_2)_nR^2$

n eine ganze Zahl von 0 bis 17

$R^2$ Tri-($C_1$-$C_6$)-alkylsilyl, geradkettiges oder cyclisches,unverzweigtes oder verzweigtes Alkyl mit 1 bis 12 Kohlenstoffatomen, Phenyl, Phenylalkyl mit 7 bis 18 Kohlenstoffatomen, geradkettiges Alkoxy mit 1 bis 12 Kohlenstoffatomen, Phenyloxy, Heteroaryl 4 oder 5 Kohlenstoffatomen, Heteroarylalkyl mit 5 bis 17 Kohlenstoffatomen, Heteroaryloxy mit 4 bis 9 Kohlenstoffatomen, wobei die Heteroarylreste jeweils ein Heteroatom aus der Reihe Sauerstoff, Schwefel, Stickstoff enthalten können, bedeuten.
In den genannten Alkylverbindungen können die Alkylreste gegebenenfalls weiter mit Di($C_1$-$C_6$)-alkylamino, Alkylthio und Alkyloxy mit 1 bis 6 Kohlenstoffatomen substituiert sein.
Die genannten aromatischen Substituenten können gegebenenfalls bis zu drei weitere Substituenten tragen, die voneinander unabhängig ausgewählt sein können aus der Gruppe Fluor, geradkettiges Alkyl mit 1 bis 6 Kohlenstoffatomen, geradkettiges Alkoxy oder Alkylthio mit 1 bis 6 Kohlenstoffatomen, Di($C_1$-$C_6$)-alkylamino, wobei die Alkylreste auch einen Cyclus bilden können.

Für das erfindungsgemäße Verfahren besonders bevorzugt sind Verbindungen der allgemeinen Formel (I), in der

$R^1$ Fluor, $(CF_2)_nCF_3$, $(CF_2)_nR^2$

n eine ganze Zahl von 1 bis 11

$R^2$ Phenyloxy, das gegebenfalls weiter durch Alkyloxy mit 1 bis 6 Kohlenstoffatomen substituiert sein kann.

Die jeweiligen Polyfluoralkyl-Verbindungen können beispielsweise in einem gegen lithiumorganische Verbindungen inerten Lösungsmittel vorgelegt werden.

Solche Lösungsmittel können zum Beispiel sein:

Cyclische oder acyclische Ether wie 1,4-Dioxan, Tetrahydrofuran, Tetrahydropyran, Diethylether, Methyl-tert.-butylether, Di-n-butylether, Ethylenglykoldimethylether (Glyme), Diethylenglycoldimethylether (Diglyme), verzweigte oder geradkettige Alkane oder Cycloalkane wie n-Pentan, n-Hexan, Cyclohexan, Methylcyclohexan, n-Heptan, n-Oktan, Fraktionen von Erdöldestillaten (Petrolether). Die Lösungsmittel können zum Beispiel einzeln oder als Gemisch eingesetzt werden.

Bevorzugt sind Diethylether, Tetrahydrofuran, n-Pentan und n-Hexan oder Mischungen dieser Lösungsmittel.
Bei Polyfluoralkyl-Verbindungen, die bei Raumtemperatur gasförmig sind, kann die Zugabe zum Lösungsmittel durch Einkondensieren oder vorherige Verflüssigung durch Kühlung erfolgen. Bevorzugt ist das Einkondensieren in das gekühlte Lösungsmittel oder das Lösungsmittelgemisch.
Zur Deprotonierung können Reagenzien eingesetzt werden, die Lithiumorganyle und gegebenenfalls komplexierende Verbindungen und gegebenenfalls aktivierende Zusätze enthalten.
Als Lithiumbasen können beispielsweise Lithiumorganyle wie Phenyllithium oder solche der allgemeinen Formel (II) eingesetzt werden,

$$LiCR^3R^4R^5 \qquad (II)$$

in der unabhängig voneinander

$R^3$ Wasserstoff, Methyl, Ethyl, n-Propyl, iso-Propyl, n-Butyl, iso-Butyl, tertiär-Butyl, n-Pentyl, n-Hexyl oder n-Heptyl

$R^4$ Wasserstoff oder Methyl

$R^5$ Wasserstoff oder Methyl

oder in der $CR^4R^5R^6$ zusammen Cyclopentyl oder Cyclohexyl bedeuten
oder Lithiumamide
wie zum Beispiel Lithium-bis-trimethylsilylamid oder Lithium-diisopropylamid (LDA) eingesetzt werden.
Bevorzugt sind n-Butyllithium, sek.-Butyllithium, tert.-Butyllithium und Phenyllithium, Lithium-bis-trimethylsilylamid und Lithium-diisopropylamid .
Die Lithiumbasen werden bevorzugt als Lösung zum Beispiel in den oben genannten Lösungsmitteln eingesetzt.
Besonders bevorzugt sind die kommerziell verfügbaren Lösungen von n-Butyllithium in n-Hexan, sek.-Butyllithium in Cyclohexan, tert.-Butyllithium in Pentan und Phenyllithium in Cyclohexan/Diethylether.
Als komplexierende Verbindungen sind gegenüber Lithiumbasen inerte Komplexbildner geeignet, wie zum Beispiel:

Kronenether, wie 12-Krone-4 oder Dibenzo-12-Krone-4,
Kryptanden wie Kryptand[2.2.2],
Podanden wie Polyglykolether,
Amine wie N,N,N,N-Tetramethylethylendiamin (TMEDA).

Als aktivierende Reagenzien kommen beispielsweise solche in Frage, die mit Lithiumbasen superbasische Mischungen bilden, wie zum Beispiel Natrium- oder Kalium-tert.-butanolat.
Die Reaktionstemperatur für den Deprotonierungsschritt kann zum Beispiel -110 bis -50°C betragen, bevorzugt sind -80 bis -60°C.
Die Deprotonierung kann zum Beispiel durch Zugabe der Lithiumbase oder bevorzugt einer Lösung davon zur Polyfluoralkyl-Verbindung oder bevorzugt einer Lösung davon, erfolgen. Auch die inverse Zugabe oder die simultane Zugabe in ein auf Reaktionstemperatur gekühltes Lösungsmittel ist möglich. Die Lithiumbase und die Polyfluoralkyl-Verbindung können auch kontinuierlich zueinander gegeben werden oder die Reaktion in einem Mikrodurchflussreaktor durchgeführt werden.
Ganz besonders bevorzugt ist die Zugabe einer Lösung der Lithiumbase zu einer Lösung der Polyfluoralkyl-Verbindung.
Das Verhältnis von Lithiumbase zur Polyfluoralkyl-Verbindung kann beispielsweise von 0,05 bis 1,3, bevorzugt

von 0,5 bis 1,0 reichen.

Komplexierende Verbindungen können beispielsweise im Verhältnis von 0,1 bis 1,2, bevorzugt zwischen 0,8 und 1,1, bezogen auf die eingesetzte Lithiumbase, eingesetzt werden.

Aktivierende Reagenzien können beispielsweise im Verhältnis von 0,1 bis 2,0, bevorzugt zwischen 0,9 und 1,1, bezogen auf die eingesetzte Lithiumbase, eingesetzt werden.

Die Summe aus Zugabezeit und Nachrührzeit kann beispielsweise 5 min bis 24 h, bevorzugt 30 Minuten bis 4 h betragen.

Die auf erfindungsgemäße Weise hergestellten Polyfluoralkyllithium-Verbindungen können beispielsweise in Lösung aufbewahrt oder in Lösung unmittelbar weiter umgesetzt werden.
Aufgrund der Tatsache, daß sich die Verbindungen oberhalb -50°C langsam zersetzen, ist die unmittelbare Weiterumsetzung der Reaktionslösungen bevorzugt.

Das erfindungsgemäße Verfahren zur Herstellung von Polyfluoralkyllithium-Verbindungen eignet sich insbesonders für die Integration in ein Verfahren zur Herstellung von weiter substituierten Polyfluoralkyl-Verbindungen. Dieses Verfahren umfasst folgende Schritte:

a) Herstellung von Polyfluoralkyllithium-Verbindungen nach erfindungsgemäßen Verfahren.

b) Umsetzung der Polyfluoralkyllithium-Verbindungen mit Elektrophilen.

Der Schritt b) kann beispielsweise mit Elektrophilen wie

- Silanen der allgemeinen Formel (III)

$$HalSiR^6R^7R^8 \quad (III),$$

in der
Hal für Chlor, Brom oder Iod und unabhängig davon und jeweils unabhängig voneinander $R^6$, $R^7$ und $R^8$ für Wasserstoff, Fluor Methyl, n-Ethyl, n-Propyl, n-Butyl, n-Hexyl, Phenyl, p-Tolyl, Benzyl, und Trifluormethyl oder Perfluoralkyl mit 2 bis 12 C-Atomen stehen können oder

- Halogenphosphanen wie beispielsweise Diphenylchlorphosphan, Dichlorphenylphosphan, Bis-(dichlorphosphino)-ethan oder
- aromatischen oder aliphatischen Aldehyden wie beispielsweise Acetaldehyd, Benzaldehyd, p-Methylbenzaldehyd oder p-Anisaldehyd,
- Halogenen wie Chlor, Brom oder Iod oder
- Interhalogenen wie zum Beispiel ICl
- Ketonen wie beispielsweise Aceton, Ethylmethylketon, Acetophenon.
- Alkyl- oder Arylalkyl- bromiden, -iodiden, -mesylaten, -p-tosylaten oder - trifluormethansulfonaten oder
- weiteren Elektrophilen wie Kohlendioxid, Schwefelkohlenstoff ($CS_2$), Thionylchlorid oder Carbodiimiden

nach gängigen Methoden durchgeführt werden.

Bevorzugte Elektrophile für Schritt b) sind Trimethylchlorsilan und aromatische Aldehyde.

Die besonderen Vorteile des erfindungsgemäßen Verfahrens liegen zum einen in den hohen Gesamtausbeuten an substituierten Polyfluoralkyl-Verbindungen, den wenig ökotoxischen und preiswerteren Ausgangsverbindungen und der Minimierung von Abfallstoffen im Vergleich zu den bisher bekannten Verfahren.

## Beispiele

Beispiel 1

Herstellung von Pentafluorethyltrimethylsilan aus Pentafluorethan und Trimethylchlorsilan

In einem 4-Halskolben mit Ankerrührer, Tropftrichter und Innenthermometer werden bei -80°C 3,6 g (30 mmol) Pentafluorethan über ein Gaseinleitungsrohr in 50 ml Diethylether vorgelegt und dann 9,1 g (20 mmol) n-Butyllithium als 15 %ige Lösung in n-Hexan langsam zugetropft. Dabei sollte die Temperatur nicht über -70°C ansteigen. Man rührt bei einer Innentemperatur von -60°C bis -65°C noch 30 min nach und tropft dann langsam 2,2 g (20 mmol) Trimethylchlorsilan in 10 ml Diethylether zu. Man entfernt die Kühlung, lässt auf Raumtemperatur kommen und reinigt das Wertprodukt Pentafluorethyltrimethylsilan durch Destillation. Die Ausbeute beträgt 93 % der Theorie.

Beispiel 2

Herstellung von (2-[3-Methoxyphenoxyl]-1,1,2,2-tetrafluorethyl)trimethylsilan aus 2-(3-Methoxyphenoxyl)-1,1,2,2-tetrafluorethan und Trimethylchlorsilan.

In einem 4-Halskolben mit Ankerrührer, Tropftrichter und Innenthermometer werden bei -78°C 6.7g (30mmol) 2-(3-Methoxyphenoxyl)-1,1,2,2-tetrafluorethan vorgelegt und anschließend 9.1g (20mmol) *n*-Butyllithium als 15%ige Lösung in *n*-Hexan langsam zugetropft. Man rührt noch 30min bei einer Innentemperatur von maximal -60°C nach und tropft dann langsam 2.2g (20mmol) Trimethylchlorsilan in 10ml Diethylether zu. Man rührt weitere 3h bei -70 bis -80°C und lässt die Reaktionsmischung anschließend auf Raumtemperatur erwärmen. Das Lösungsmittel wird entfemt, der Rückstand in Pentan aufgenommen und vom LiCl abfiltriert. Das Wertprodukt (2-[3-Methoxyphenoxyl]-1,1,2,2-tetrafluorethyl)trimethylsilan wird durch Destillation gereinigt. Die Ausbeute beträgt 75% der Theorie.

Beispiel 3

Herstellung von Heptafluorpropylphenylalkohol aus 1H-Heptafluorpropan und Benzaldehyd.

In einem 4-Halskolben mit Ankerrührer, Tropftrichter und Innenthermometer werden 3.6g (30mmol) 1H-Heptafluorpropan in 60ml Ether vorgelegt und auf -80°C abgekühlt. Dann tropft man 9g (20mmol) *tert*-BuLi als 15%ige Lösung in Pentan zu und rührt noch 30min bei der Temperatur. Anschließend werden 2.1g (20mmol) Benzaldehyd in 10ml Ether zugetropft. Nach 2h Rühren bei -80°C lässt man die gelbe Lösung auftauen und gibt verdünnte Salzsäure hinzu. Es wird dreimal mit Ether extrahiert, die vereinigten organischen Phasen getrocknet und filtriert. Man reinigt durch Destillation und erhält Heptafluorpropylphenylalkohol in 70%iger Reinheit.

## Patentansprüche

1. Verfahren zur Herstellung von Polyfluoralkyllithium-Verbindungen, **dadurch gekennzeichnet, dass** man Polyfluoralkylverbindungen der allgemeinen Formel (I)

$$HCF_2R^1$$

in der

$R^1$ Fluor, $(CF_2)_nCF_3$, $(CF_2)_nR^2$

n eine ganze Zahl von 0 bis 17

$R^2$ Tri-($C_1$-$C_6$)-alkylsilyl, Triphenylsilyl, cyclisches Alkyl mit 3 bis 8 Kohlenstoffatomen, geradkettiges oder verzweigtes Alkyl mit 1 bis 24 Kohlenstoffatomen, Aryl mit 6 bis 10 Kohlenstoffatomen, Arylalkyl mit 7 bis 18 Kohlenstoffatomen, geradkettiges oder verzweigtes Alkenyl mit 2 bis 12 Kohlenstoffatomen, geradkettiges oder verzweigtes Alkoxy mit 1 bis 12 Kohlenstoffatomen, Aryloxy mit 6 bis 10 Kohlenstoffatomen, Heteroaryl mit 4 bis 9 Kohlenstoffatomen, Heteroarylalkyl mit 5 bis 17 Kohlenstoffatomen, Heteroaryloxy mit 4 bis 9 Kohlenstoffatomen, wobei die Heteroarylreste jeweils bis zu 2 Heteroatome aus der Reihe Sauerstoff,

Schwefel, Stickstoff enthalten können, bedeuten und wobei in den genannten Alkylverbindungen die Alkylreste gegebenenfalls weiter mit Di($C_1$-$C_6$)-akylamino, Alkylthio und Alkyloxy mit 1 bis 12 Kohlenstoffatomen substituiert sein können und wobei die genannten aromatischen Substituenten keinen, einen, zwei oder drei weitere Substituenten tragen können, die voneinander unabhängig ausgewählt sind aus der Gruppe Fluor, cyclisches Alkyl mit 3 bis 6 Kohlenstoffatomen, geradkettiges oder verzweigtes Alkyl mit 1 bis 12 Kohlenstoffatomen, geradkettiges oder verzweigtes Alkoxy oder Alkylthio mit 1 bis 12 Kohlenstoffatomen, geradkettiges oder verzweigtes Alkenyl mit 2 bis 12 Kohlenstoffatomen, Di($C_1$-$C_6$)-alkylamino, N-($C_5$-$C_{12}$)-Azacycloalkyl,

mit Lithiumbasen deprotoniert.

2. Verfahren nach Anspruch 1, **dadurch gekennzeichnet, dass** als Polyfluoralkyl-Verbindungen solche der allgemeinen Formel (I) eingesetzt werden,

$$HCF_2R^1 \quad (I)$$

in der

$R^1$ Fluor, $(CF_2)_nCF_3$, $(CF_2)_nR^2$

n eine ganze Zahl von 0 bis 17

$R^2$ Phenyloxy das mit mit keinem, einem, zwei oder drei Alkyloxy-Gruppen mit 1 bis 6 Kohlenstoffatomen substituiert ist.

3. Verfahren nach einem oder mehreren der Ansprüche 1 bis 2, **dadurch gekennzeichnet, dass** als Lithiumbasen Lithium-bis-trimethylsilylamid, Lithium-diisopropylamid, Phenyllithium oder solche der allgemeinen Formel (II) eingesetzt werden,

$$LiCR^3R^4R^5 \quad (II)$$

in der unabhängig voneinander

$R^3$ Wasserstoff, Methyl, Ethyl, n-Propyl, iso-Propyl, n-Butyl, iso-Butyl, tertiär-Butyl, n-Pentyl, n-Hexyl oder n-Heptyl

$R^4$ Wasserstoff oder Methyl

$R^5$ Wasserstoff oder Methyl

oder in der $CR^4R^5R^6$ zusammen Cyclopentyl oder Cyclohexyl bedeuten.

4. Verfahren nach einem oder mehreren der Ansprüche 1 bis 3, **dadurch gekennzeichnet, dass** als Lithiumbasen n-Butyllithium, sek.-Butyllithium, tert.-Butyllithium oder Phenyllithium eingesetzt werden.

5. Verfahren nach einem oder mehreren der Ansprüche 1 bis 4, **dadurch gekennzeichnet, dass** die Lithiumbasen als Lösung eingesetzt werden.

6. Verfahren nach einem oder mehreren der Ansprüche 1 bis 5, **dadurch gekennzeichnet, dass** die Deprotonierung bei -110 bis -50°C durchführt.

7. Verfahren nach einem oder mehreren der Ansprüche 1 bis 6, **dadurch gekennzeichnet, dass** die Deprotonierung in Gegenwart komplexierender Verbindungen durchgeführt wird.

8. Verfahren nach Anspruch 7, **dadurch gekennzeichnet, dass** die Deprotonierung in Gegenwart von Kronenethern,

Kryptanden, Podanden, Polyethern oder Aminen durchgeführt wird.

**9.** Verfahren nach einem oder mehreren der Ansprüche 1 bis 8, **dadurch gekennzeichnet, dass** die Deprotonierung in Gegenwart von Kalium- oder Natrium-tert.-Butanolat durchgeführt wird.

## Claims

**1.** Process for preparing polyfluoroalkyllithium compounds, **characterized in that** polyfluoroalkyl compounds of the general formula (I),

$$HCF_2R^1$$

where

$R^1$ is fluorine, $(CF_2)_nCF_3$, $(CF_2)_nR^2$

n is an integer from 0 to 17 and

$R^2$ is tri-($C_1$-$C_6$)-alkylsilyl, triphenylsilyl, cyclic alkyl having from 3 to 8 carbon atoms, straight-chain or branched alkyl having from 1 to 24 carbon atoms, aryl having from 6 to 10 carbon atoms, arylalkyl having from 7 to 18 carbon atoms, straight-chain or branched alkenyl having from 2 to 12 carbon atoms, straight-chain or branched alkoxy having from 1 to 12 carbon atoms, aryloxy having from 6 to 10 carbon atoms, heteroaryl having from 4 to 9 carbon atoms, heteroarylalkyl having from 5 to 17 carbon atoms, heteroaryloxy having from 4 to 9 carbon atoms, where the heteroaryl radicals can each contain up to 2 hetero atoms selected from the group consisting of oxygen, sulphur and nitrogen, the alkyl radicals in these alkyl compounds may, if desired, be substituted further by di($C_1$-$C_6$)-alkylamino, alkylthio or alkyloxy each having from 1 to 12 carbon atoms and the aromatic substituents mentioned may bear no, 1, 2 or 3 further substituents which can be selected independently from the group consisting of fluorine, cyclic alkyl having from 3 to 6 carbon atoms, straight-chain or branched alkyl having from 1 to 12 carbon atoms, straight-chain or branched alkoxy and alkylthio each having from 1 to 12 carbon atoms, straight-chain or branched alkenyl having from 2 to 12 carbon atoms and di($C_1$-$C_6$)-alkylamino and N-($C_5$-$C_{12}$)-azacycloalkyl,

are deprotonated by means of lithium bases.

**2.** Process according to Claim 1, **characterized in that** the polyfluoroalkyl compounds used are compounds of the general formula (I),

$$HCF_2R^1 \qquad (I)$$

where

$R^1$ is fluorine, $(CF_2)_nCF_3$, $(CF_2)_nR^2$

n is an integer from 0 to 17 and

$R^2$ is phenyloxy substituted by no, 1, 2 or 3 alkyloxy groups having from 1 to 6 carbon atoms.

**3.** Process according to one or more of Claims 1 to 2, **characterized in that** the lithium bases used are lithium bis (trimethylsilyl)amide, lithium diisopropylamide, phenyllithium or compounds of the general formula (II),

$$LiCR^3R^4R^5 \qquad (II)$$

where, independently of one another,

$R^3$ is hydrogen, methyl, ethyl, n-propyl, isopropyl, n-butyl, isobutyl, tert-butyl, n-pentyl, n-hexyl or n-heptyl,

$R^4$ is hydrogen or methyl,

$R^5$ is hydrogen or methyl

or $CR^4R^5R^6$ is cyclopentyl or cyclohexyl.

**4.** Process according to one or more of Claims 1 to 3, **characterized in that** the lithium base used is n-butyllithium, sec-butyllithium, tert-butyllithium or phenyllithium.

**5.** Process according to one or more of Claims 1 to 4, **characterized in that** the lithium bases are used as solutions.

**6.** Process according to one of more of Claims 1 to 5, **characterized in that** the deprotonation is carried out at from -110 to -50°C.

**7.** Process according to one or more of Claims 1 to 6, **characterized in that** the deprotonation is carried out in the presence of complexing compounds.

**8.** Process according to Claim 7, **characterized in that** the deprotonation is carried out in the presence of crown ethers, cryptands, podands, polyethers or amines.

**9.** Process according to one or more of Claims 1 to 8, **characterized in that** the deprotonation is carried out in the presence of potassium tert-butoxide or sodium tert-butoxide.

**Revendications**

**1.** Procédé pour la préparation de dérivés de polyfluoralkyllithium, **caractérisé en ce que** l'on soumet des dérivés polyfluoralkylés de formule générale (I),

$$HCF_2R^1$$

dans laquelle

$R^1$ représente le fluor, $(CF_2)_nCF_3$, $(CF_2)_nR^2$

n est un nombre entier allant de 0 à 17,

$R^2$ représente un groupe tri-(alkyle en $C_1$ à $C_6$)-silyle, triphénylsilyle, un groupe alkyle cyclique en $C_3$-$C_8$, un groupe alkyle à chaîne droite ou ramifiée en $C_1$-$C_{24}$, un groupe aryle en $C_6$-$C_{10}$, un groupe arylalkyle en $C_7$-$C_{18}$, un groupe alcényle à chaîne droite ou ramifiée en $C_2$-$C_{12}$, un groupe alcoxy à chaîne droite ou ramifiée en $C_1$-$C_{12}$, un groupe aryloxy en $C_6$-$C_{10}$, un groupe hétéroaryle en $C_4$-$C_9$, hétéroarylalkyle en $C_5$-$C_{17}$, hétéroaryloxy en $C_4$-$C_9$, les parties hétéroaryle pouvant contenir chacune jusqu'à deux hétéroatomes choisis parmi l'oxygène, le soufre et l'azote, et dans les dérivés alkylés mentionnés, les groupes alkyle peuvent le cas échéant porter d'autres substituants di(alkyle en $C_1$-$C_6$)amino, alkylthio et alkyloxy en $C_1$-$C_{12}$, les substituants aromatiques mentionnés pouvant porter 1, 2 ou 3 autres substituants choisis, indépendamment les uns des autres, parmi le fluor, les groupes alkyle cycliques en $C_3$-$C_6$, les groupes alkyle à chaîne droite ou ramifiée en $C_1$-$C_{12}$, les groupes alcoxy ou alkylthio à chaîne droite ou ramifiée en $C_1$-$C_{12}$, les groupes alcényle à chaîne droite ou ramifiée en $C_2$-$C_{12}$, les groupes di (alkyle en $C_1$-$C_6$)amino, N-azacycloalkyle en $C_5$-$C_{12}$,

à déprotonation à l'aide de bases lithiques.

**2.** Procédé selon revendication 1, **caractérisé en ce que** les dérivés polyfluoralkylés mis en oeuvre répondent à la formule générale (I),

$$HCF_2R^1 \qquad (I)$$

dans laquelle

$R^1$ représente le fluor, $(CF_2)_nCF_3$, $(CF_2)_nR^2$
n est un nombre entier allant de 0 à 17,
$R^2$ représente un groupe phényloxy non substitué ou portant 1, 2 ou 3 substituants alkyloxy en $C_1$-$C_6$.

**3.** Procédé selon une ou plusieurs des revendications 1 à 2, **caractérisé en ce que** l'on utilise en tant que bases lithiques le bis-triméthylsilylamidure de lithium, le diisopropylamidure de lithium, le phényllithium ou des bases de formule générale (II),

$$LiCR^3R^4R^5 \quad (II)$$

dans laquelle les divers symboles représentent chacun, indépendamment les uns des autres
$R^3$: l'hydrogène, un groupe méthyle, éthyle, n-propyle, isopropyle, n-butyle, isobutyle, tert-butyle, n-pentyle, n-hexyle ou n-heptyle,
$R^4$ : l'hydrogène ou un groupe méthyle,
$R^5$ : l'hydrogène ou un groupe méthyle,
ou bien $CR^4R^5R^6$ représentent ensemble un groupe cyclopentyle ou cyclohexyle.

**4.** Procédé selon une ou plusieurs des revendications 1 à 3, **caractérisé en ce que** les bases lithiques mises en oeuvre sont le n-butyllithium, le sec-butyllithium, le tert-butyllithium ou le phényllithium.

**5.** Procédé selon une ou plusieurs des revendications 1 à 4, **caractérisé en ce que** les bases lithiques sont mises en oeuvre en solution.

**6.** Procédé selon une ou plusieurs des revendications 1 à 5, **caractérisé en ce que** la déprotonation est réalisée à des températures de -110 à -50°C.

**7.** Procédé selon une ou plusieurs des revendications 1 à 6, **caractérisé en ce que** la déprotonation est réalisée en présence de composés complexants.

**8.** Procédé selon revendication 7, **caractérisé en ce que** la déprotonation est réalisée en présence d'éthers en couronne, de cryptands, de podants, de polyéthers ou d'amines.

**9.** Procédé selon une ou plusieurs des revendications 1 à 8, **caractérisé en ce que** la déprotonation est réalisée en présence de tert-butylate de potassium ou de sodium.